(19) **Europäisches Patentamt**
**European Patent Office**
**Office européen des brevets**

(11) **EP 2 379 622 B1**

(12) **EUROPEAN PATENT SPECIFICATION**

(45) Date of publication and mention
of the grant of the patent:
**31.10.2012 Bulletin 2012/44**

(51) Int Cl.:
**C08G 77/04** (2006.01)   **C09D 183/04** (2006.01)
**C08K 7/22** (2006.01)

(21) Application number: **09812494.4**

(22) Date of filing: **25.12.2009**

(86) International application number:
**PCT/JP2009/071912**

(87) International publication number:
**WO 2010/076893 (08.07.2010 Gazette 2010/27)**

(54) **CURABLE ORGANOPOLYSILOXANE COMPOSITION AND POROUS CURED ORGANOPOLYSILOXANE MATERIAL**

HÄRTBARE ORGANOPOLYSILOXANZUSAMMENSETZUNG UND PORÖSES GEHÄRTETES ORGANOPOLYSILOXANMATERIAL

COMPOSITION D'ORGANOPOLYSILOXANE DURCISSABLE ET MATÉRIAU POREUX D'ORGANOPOLYSILOXANE DURCI

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.12.2008 JP 2008335801**

(43) Date of publication of application:
**26.10.2011 Bulletin 2011/43**

(73) Proprietor: **Dow Corning Toray Co., Ltd.**
**Tokyo 100-0004 (JP)**

(72) Inventors:
• **IWAI, Makoto**
**Ichihara-shi**
**Chiba 299-0108 (JP)**

• **ADACHI, Hiroshi**
**Ichihara-shi**
**Chiba 299-0108 (JP)**
• **MORI, Hideyuki**
**Ichihara-shi**
**Chiba 299-0108 (JP)**

(74) Representative: **Gillard, Richard Edward**
**Elkington and Fife LLP**
**Thavies Inn House**
**3-4 Holborn Circus**
**London EC1N 2HA (GB)**

(56) References cited:
**US-A1- 2004 132 890     US-B1- 6 261 214**

## Description

## Technical Field

The present invention relates to a curable organopolysilaxane composition and to a porous cured organopolysiloxane material and more particularly relates to a curable organopolysiloxane composition that contains a hollow filler and to a porous cured organopolysiloxane material that is the cured product of this composition.

## Background Art

Porous cured organopolysiloxane materials exhibit excellent heat resistance and weathering resistance, are lightweight, and also have a low thermal conductivity and for these reasons are used, for example, for automotive components; for the rolls and belts in image-forming devices such as copiers and facsimile machines; as various sealing articles; and as coating agents that provide thermal insulation, vibration proofing, vibration damping, and/or soundproofing. Silicone compositions that incorporate a heat-decomposing organic blowing agent or any of various volatile components have been used to produce porous cured organopolysiloxane materials, but it has been difficult to obtain porous articles having a low thermal conductivity of not more than 0.080 W/(m · K) from compositions that are a simple mixture of a hollow filler with a curable organopolysiloxane.

A silicone rubber composition for heat fixing roll applications is described in JP 2000-143986 A (equivalent to US6261214); this silicone rubber composition characteristically incorporates 0.1 to 20 weight parts of a hollow filler having an average particle size no greater than 200 μm, in 100 weight parts of a thermosetting organopolysiloxane composition. A hydrosilylation reaction curable silicone rubber composition that contains water and a hollow powder is described in JP 2003-147207 A (equivalent to US2004-0132890). However, when the hollow filler content in these compositions is increased, the resulting porous cured product exhibits a very substantial reduction in strength, which has made it impossible to achieve a satisfactory reduction in the thermal conductivity of the porous cured product.

JP 10-077409 A describes a silicone composition that contains, in 100 weight parts of a liquid polysiloxane polymer, 0.1 to 10 weight parts microballons, water and/or a water dispersant, a curing agent, and a filler. However, achieving high filling levels with hollow filler has been problematic with this composition and it has therefore not been possible to achieve a satisfactory lowering of the thermal conductivity.

## Disclosure of Invention

An object of the present invention is to provide a curable organopolysiloxane composition that can form a porous cured organopolysiloxane material that has a low thermal conductivity.

The curable organopolysiloxane composition of the present invention characteristically comprises (A) an organopolysiloxane that contains at least two crosslinking reactive groups in each molecule, (B) a crosslinking agent, (C) a crosslinking catalyst, (D) a hollow filler having a true density of 0.001 to 3.000 g/cm$^3$, in an amount that is at least 70 volume% of the total volume of component (A) and the hollow filler, (E) water, at 20 to 1,000 mass parts per 100 mass parts component (A), and (F) an emulsifying agent, at 0.01 to 30 mass parts per 100 mass parts component (E).

The porous cured organopolysiloxane material of the present invention is obtained by curing the aforementioned curable organopolysiloxane composition.

A characteristic feature of the curable organopolysiloxane composition of the present invention is that it crosslinks and cures to form a porous article that has a low thermal conductivity. Another characteristic feature of the curable organopolysiloxane composition of the present invention is that the resulting porous cured organopolysiloxane material exhibits toughness and an excellent strength. An additional characteristic feature of the curable organopolysiloxane composition of the present invention is that neither shrinkage nor expansion of the external dimensions of the molding occurs when the porous cured organopolysiloxane material is molded and the ability to reproduce the shape of the mold or die used for molding is therefore excellent.

## Best Mode for Carrying Out the Invention

The curable organopolysiloxane composition of the present invention is a composition that can give a cured product by crosslinking based on a condensation reaction or is a composition that can give a cured product by crosslinking based on a hydrosilylation reaction. In addition, the curable organopolysiloxane composition of the present invention is preferably an ambient temperature curable composition that cures at room temperature, but as necessary its cure may be accelerated by the application of heat.

The curable organopolysiloxane composition preferably comprises (A) an organopolysiloxane that contains at least two crosslinking reactive groups in each molecule, (B) a crosslinking agent, and (C) a crosslinking catalyst.

There are no particular limitations on the molecular structure of the (A) organopolysiloxane that contains at least two crosslinking reactive groups in each molecule, and this molecular structure can be exemplified by diorganopolysiloxanes that have a straight chain molecular structure or a partially branched straight chain molecular structure and by silicone resins that have a branched or network structure, such as an organopolysiloxane comprising the siloxane unit represented by the formula $R_3SiO_{1/2}$ and the siloxane unit represent by the formula $SiO_{4/2}$; an organopolysiloxane comprising the siloxane unit represented by the formula $R_3SiO_{1/2}$ and the siloxane unit represented by the formula $RSiO_{3/2}$; an organopolysiloxane comprising the siloxane unit represented by the formula $R_3SiO_{1/2}$, the siloxane unit represented by the formula $R_2SiO_{2/2}$, and the siloxane unit represented by the formula $RSiO_{3/2}$; and an organopolysiloxane comprising the siloxane unit represented by the formula $k_2SiO_{2/2}$ and the siloxane unit represented by the formula $RSiO_{3/2}$, wherein R in the preceding formulas is a monovalent group. When component (A) is a liquid, the viscosity of component (A) at 25°C is preferably 0.01 to 100 Pa · s, and more preferably is in the range from 0.1 to 40 Pa · s.

The crosslinking reactive group present in component (A) can be exemplified by $C_{2-10}$ alkenyl such as vinyl, allyl, hexenyl; $C_{1-10}$ alkoxy such as methoxy, ethoxy, propoxy, butoxy; $C_{2-10}$ alkoxyalkoxy such as methoxymethoxy, methoxyethoxy, ethoxymethoxy, ethoxyethoxy, methoxypropoxy; and the hydroxyl group. The crosslinking reactive group, e.g., alkenyl, alkoxy, alkoxyalkoxy, hydroxyl, may be present in molecular chain terminal position on component (A), in side chain position on the molecular chain, or in both positions. The silicon-bonded groups other than the crosslinking reactive groups can be exemplified by $C_{1-8}$ alkyl such as methyl, ethyl, propyl, isobutyl, hexyl, octyl; aryl such as phenyl; alalkyl such as tolyl; and halogenated alkyl such as 3,3,3-trifluoropropyl, nonafluorobutylethyl.

Component (A) in the case of the curable organopolysiloxane composition that cures by a condensation reaction is preferably an alkoxy-functional organopolysiloxane that contains in each molecule at least two alkoxy groups as the crosslinking reactive groups; an alkoxyalkoxy-functional organopolysiloxane that contains in each molecule at least two alkoxyalkoxy groups as the crosslinking reactive groups; or a hydroxyl-functional organopolysiloxane that contains in each molecule at least two hydroxyl groups as the crosslinking reactive groups. Component (A) can be specifically exemplified by a polydimethylsiloxane endblocked by the hydroxyl group at both molecular chain terminals, a dimethylsiloxane · methylvinylsiloxane copolymer endblocked by the hydroxyl group at both molecular chain terminals, a polydimethylsiloxane endblocked by the trimethoxysilyl group at both molecular chain terminals, a polydimethylsiloxane endblocked by the triethoxysilyl group at both molecular chain terminals, a polydimethylsiloxane endblocked by the trimethoxyethoxysilyl group at both molecular chain terminals, and mixtures of the preceding.

The crosslinking agent (B) in the case of the curable organopolysiloxane composition that cures by a condensation reaction can be exemplified by a silicon compound that contains in each molecule at least three groups that undergo a hydrolysis and condensation reaction with the crosslinking reactive groups, e.g., alkoxy or hydroxyl, in component (A). Component (B) is preferably an alkoxy-functional silicon compound, for example, an alkyltrialkoxysilane such as methyltrimethoxysilane, ethyltrimethoxysilane, methyltriethoxysilane. The crosslinking agent (B) is preferably incorporated at 2 to 15 mass parts per 100 mass parts component (A).

The crosslinking catalyst (C) in the case of the curable organopolysiloxane composition that cures by a condensation reaction is a catalyst that accelerates the condensation reaction-based crosslinking reaction in the curable organopolysiloxane composition. This crosslinking catalyst (C) can be exemplified by tin catalysts such as di-n-butyltin diacetate, di-n-butyltin di-2-ethylhexoate, n-butyltin tri-2-ethylhexoate, di-n-butyltin dilaurate, di-n-butyltin dioctoate, tin octylate, tin octenoate, tin laurate, tin naphthenate, tin oleate; organotitanate ester compounds such as tetra-n-butyl titanate, tetraisopropyl titanate, tetra-2-ethylhexyl titanate, ethylene glycol titanate; titanium-based catalysts such as diisoproxybis(acetylacetone)titanium, diisopropoxybis(ethyl acetoacetate)titanium, diisopropoxybis(methyl acetoacetate)titanium, dimethoxybis(methyl acetoacetate)titanium, dibutoxybis(ethyl acetoacetate)titanium, titanium naphthenate, catalysts based on the metal salts of organic acids, such as ferric stannooctenoate, lead laurate, zinc octenoate, cobalt naphthenate, iron naphthenate, zinc naphthenate, zinc stearate, iron octenoate, lead octenoate; amine-type catalysts such as n-hexylamine, guanidine, and mixtures of two or more of these condensation reaction catalysts. This condensation reaction catalyst (C) is incorporated at preferably 0.001 to 20 mass parts per 100 mass parts component (A) and more preferably at 0.01 to 5 mass parts per 100 mass parts component (A).

Component (A) in the case of the curable organopolysiloxane composition that cures by a hydrosilylation reaction is preferably an alkenyl-functional organopolysiloxane that contains in each molecule at least two alkenyl groups as the crosslinking reactive groups. The alkenyl is preferably $C_{2-10}$ alkenyl wherein vinyl is the most preferred. Specific examples of this component (A) are a dimethylsiloxane · methylvinylsiloxane copolymer endblocked by the hydroxyl group at both molecular chain terminals; a dimethylsiloxane · methylvinylsiloxane copolymer endblocked by the trimethylsilyl group at both molecular chain terminals; a polydimethylsiloxane endblocked by the dimethylvinylsilyl group at both molecular chain terminals; a dimethylsiloxane · methylvinylsiloxane copolymer endblocked by the dimethylvinylsilyl group at both molecular chain terminals; an organopolysiloxane comprising the siloxane unit represented by the formula $Me_2ViSiO_{1/2}$, the siloxane unit represented by the formula $Me_3SiO_{1/2}$, and the siloxane unit represented by the formula $SiO_{4/2}$ wherein here and below Me in the formulas represents the methyl group and Vi represents the vinyl group; and mixtures of two or more of the preceding.

The crosslinking agent (B) in the case of the curable organopolysiloxane composition that cures by a hydrosilylation reaction can be exemplified by an SiH-functional organopolysiloxane that contains at least two silicon-bonded hydrogen atoms in each molecule. The other groups bonded to silicon in this SiH-functional organopolysiloxane are exemplified by the same groups as the non-crosslinking reactive groups in component (A). This SiH-functional organopolysiloxane having at least two silicon-bonded hydrogens in each molecule can be exemplified by a polydimethylsiloxane endblocked by a diorganohydrogensiloxy group at both molecular chain terminals; a dimethylsiloxane · methylhydrogensiloxane copolymer endblocked by the trimethylsilyl group at both molecular chain terminals; a dimethylsiloxane · methylhydrogensiloxane copolymer endblocked by a diorganohydrogensiloxy group at both molecular chain terminals; a cyclic methylhydrogenpolysiloxane; an organopolysiloxane comprising the siloxane unit represented by the formula $Me_2HSiO_{1/2}$ and the siloxane unit represented by the formula $SiO_{4/2}$; an organopolysiloxane comprising the siloxane unit represented by the formula $Me_2HSiO_{1/2}$, the siloxane unit represented by the formula $Me_3SiO_{1/2}$, and the siloxane unit represented by the formula $SiO_{4/2}$; and mixtures of two or more of the preceding. The SiH-functional organopolysiloxane having at least two silicon-bonded hydrogens in each molecule is incorporated in an amount whereby the number of silicon-bonded hydrogen atoms relative to the number of alkenyl groups in component (A) is preferably in the range of 1 : 5 to 5 : 1 and more preferably in the range of 1 : 3 to 2 : 1.

The crosslinking catalyst (C) in the case of the curable organopolysiloxane composition that cures by a hydrosilylation reaction can be exemplified by platinum-based catalysts such as chloroplatinic acid, alcohol solutions of chloroplatinic acid, olefin complexes of platinum, alkenylsiloxane complexes of platinum, platinum black, platinum supported on silica, rhodium-based catalysts such as rhodium chloride complexes and so forth; and palladium catalysts such as palladium chloride, palladium supported on carbon. Platinum-based catalysts are preferred among the preceding for their high reactivities. The crosslinking catalyst (C) is incorporated preferably at 0.1 to 1000 mass parts per 1,000,000 mass parts component (A). In the particular case of platinum-based catalysts, the amount of incorporation is preferably 1 to 50 mass parts as platinum metal per 1,000,000 mass parts component (A).

The curable organopolysiloxane composition that cures by a hydrosilylation reaction preferably also contains a cure retarder in order to improve the storage stability and handling characteristics of the curable organopolysiloxane composition. The cure retarder can be exemplified by acetylenic compounds such as 2-methyl-3-butyn-2-ol, 3,5-dimethyl-1-hexyn-3-ol, 2-phenyl-3-butyn-2-ol, en-yne compounds such as 3-methyl-3-penten-1-yne, 3,5-dimethyl-3-hexen-1-yne, organosiloxane compounds that have at least 5 mass% vinyl in each molecule, such as 1,3,5,7-tetramethyl-1,3,5,7-tetravinylcyclotetrasiloxane, 1,3,5,7-tetramethyl-1,3,5,7-tetrahexenylcyclotetrasiloxane, a methylvinylpolysiloxane endblocked by the silanol group at both molecular chain terminals ; triazoles such as benzotriazole; as well as phosphines, mercaptans, hydrazines. The quantity of incorporation of these cure retarders is not limited, but 0.001 to 5 mass parts per 100 mass parts component (A) is preferred.

The curable organopolysiloxane composition used by the present invention may optionally incorporate a reinforcing filler such as precipitated silica, fumed silica, surface-hydrophobed fumed silica, carbon black, a nonreinforcing filler such as quartz powder, diatomaceous earth, asbestos, aluminosilicic acid, iron oxide, zinc oxide, and calcium carbonates such as light calcium carbonate and heavy calcium carbonate; the preceding fillers after surface treatment with an organosilicon compound such as an organosilane, an organosilazane, a polyorganosiloxane; and a carbon black such as acetylene black, furnace black, channel black. Among the preceding, the incorporation is preferred of a reinforcing silica filler such as fumed silica, surface-hydrophobed fumed silica, and/or a nonreinforcing filler such as quartz powder, diatomaceous earth. Those additives known for silicone rubber compositions may also be incorporated on an optional basis, such as pigments, heat stabilizers, flame retardants, internal release agents, plasticizers, acid acceptors, nonfunctional silicone oils. Because it contains water, the curable organopolysiloxane composition of the present invention may also incorporate a preservative and an antirust agent.

The hollow filler (D) is incorporated in the curable organopolysiloxane composition of the present invention in an amount that is at least 70 volume%, preferably at least 75 volume%, and more preferably at least 80 volume% of the total volume of component (A) and the hollow filler (D). A hollow filler content less than the aforementioned lower limit may not provide an adequate reduction in the thermal conductivity of the porous cured organopolysiloxane material yielded by the cure of the curable organopolysiloxane composition of the present invention. The hollow filler (D) can be exemplified by hollow filler having a shell comprising an inorganic material, hollow filler having a shell comprising an organic resin, and hollow filler having a shell comprising an organopolysiloxane. The internal volume of the hollow filler may be filled with a gas such as air, an inert gas, or may hold a vacuum.

This component (D) may be, for example, an inorganic hollow filler selected from, for example, glass balloons, silica balloons, carbon balloons, phenol balloons, alumina balloons, zirconia balloons, shirasu balloons; an organic resin hollow filler in which the shell is constituted of an organic resin selected from (i) the polymers of monomer selected from vinylidene chloride, acrylonitrile, methacrylonitrile, acrylate esters, and methacrylate esters and (ii) copolymers of two or more of the preceding monomers; and silicone resin hollow filler in which the shell is constituted of an organopolysiloxane. Preferred for component (D) are glass balloons and hollow filler in which the shell is constituted of an organic resin selected from (i) the polymers of monomer selected from vinylidene chloride, acrylonitrile, methacrylonitrile, acrylate esters, and methacrylate esters and (ii) copolymers of two or more of the preceding monomers. In addition, an inorganic filler may be bound on the surface of the hollow filler (D), and the surface of the hollow filler (D) may also be treated with a silane that has a silicon-bonded hydrolyzable group.

The true density of the hollow filler (D) is preferably in the range of 0.001 to 3.000 g/cm$^3$, more preferably in the range of 0.005 to 1,000 g/cm$^3$, and even more preferably in the range of 0.010 to 0.500 g/cm$^3$. When the true density of the hollow filler (D) is less than the aforementioned lower limit, the handling characteristics can deteriorate and the shell of the hollow filler (D) becomes too thin, resulting in a reduced strength and the risk of fracture during incorporation. When, on the other hand, the true density of the hollow filler (D) exceeds the aforementioned upper limit, a satisfactory reduction in the thermal conductivity may not be obtained for the porous cured organopolysiloxane material yielded by the cure of the curable organopolysiloxane composition of the present invention.

The average particle size of the hollow filler (D) is preferably not greater than 200 $\mu$m and more preferably is not greater than 100 $\mu$m. The average particle size can be determined by laser diffraction as the weight-average value or the median diameter.

The water (E) is a component for incorporating the hollow filler (D) in the curable organopolysiloxane composition of the present invention in an amount that is at least 70 volume% and more preferably at least 75 volume% of the total volume of component (A) and the hollow filler (D). Component (E) should be pure but is not otherwise limited as to type. Examples are tap water, well water, ion-exchanged water, distilled water, wherein ion-exchanged water is preferred among the preceding.

The water (E) is incorporated, per 100 mass parts component (A), at 20 to 1,000 mass parts, preferably at 50 to 700 mass parts, more preferably at 80 to 500 mass parts, and particularly preferably at 100 to 300 mass parts. When the amount of component (E) incorporation is less than the aforementioned lower limit, the viscosity of the curable organopolysiloxane composition of the present invention becomes overly large and as a result the handling characteristics may be impaired and the incorporation of component (D) may become problematic. When, on the other hand, the amount of component (E) incorporation exceeds the aforementioned upper limit, the viscosity of the composition of the present invention will be too low and as a result the handling characteristics may be impaired and the risk arises that the water may tend to separate during storage of the curable organopolysiloxane composition of the present invention.

The water (E) may be mixed in advance with the hollow filler (D) and then incorporated into the curable organopolysiloxane composition of the present invention or may be mixed in advance with the emulsifying agent (F) and then incorporated into the curable organopolysiloxane composition of the present invention. In addition, component (A) may be emulsified and dispersed in component (E) in the presence of component (F) and this may be incorporated into the curable organopolysiloxane composition of the present invention.

The emulsifying agent (F) imparts toughness to the porous cured organopolysiloxane material provided by the cure of the curable organopolysiloxane composition of the present invention and thereby improves the brittleness and improves the moldability.

The emulsifying agent (F) content is, in each case per 100 mass parts component (E), 0.01 to 30 mass parts, preferably 0.1 to 10 mass parts, and more preferably 0.3 to 5 mass parts. When the emulsifying agent (F) content is less than the aforementioned lower limit, a satisfactory toughness may not be exhibited by the porous cured organopolysiloxane material provided by the cure of the curable organopolysiloxane composition of the present invention. When, on the other hand, the emulsifying agent (F) content exceeds the aforementioned upper limit, the surface of the porous cured organopolysiloxane material may be sticky.

The heretofore known emulsifying agents can be used as the emulsifying agent (F), and the emulsifying agent (F) may be an anionic, cationic, amphoteric, or nonionic emulsifying agent. Specific examples are nonionic surfactants such as glycerol fatty acid esters, polyglycerol fatty acid esters, sorbitan fatty acid esters, sucrose fatty acid esters, polyethylene glycol fatty acid esters, polypropylene glycol fatty acid esters, polyoxyethylene glycerol fatty acid esters, polyoxyethylene sorbitan fatty acid esters, polyoxyethylene polyoxypropylene block copolymers, polyoxyethylene alkyl ethers, polyoxyethylene alkylphenyl ethers, and polyoxyethylene fatty acid amides; nonionic surfactants comprising a polyorganosiloxane, such as a polysiloxane · polyoxyethylene copolymer; cationic surfactants such as aliphatic amine salts, quaternary ammonium salts, and alkylpyridinium salts; anionic surfactants such as the salts of higher fatty acids, the salts of higher alcohol sulfate esters, alkylbenzenesulfonate salts, alkylnaphthalenesulfonate salts, and the salts of polyethylene glycol sulfate esters; amphoteric surfactants such as carboxybetaine types and glycine types; and mixtures of two or more of the preceding. Nonionic surfactants and nonionic surfactants comprising a polyorganosiloxane are preferred among the preceding.

The curable organopolysiloxane composition of the present invention can be produced simply by mixing the previously described components (A) to (F) and any optional additives to uniformity using a known mixing means. The mixer used here can be exemplified by homomixers, paddle mixers, homodispersers, colloid mills, vacuum mixing/stirring mixers, but there is no particular limitation on the mixer.

The curable organopolysiloxane composition under consideration can be produced, for example, by the methods provided below. When a reinforcing filler is incorporated, in a preferred embodiment a silica masterbatch is preliminarily prepared by blending the reinforcing filler with a portion of component (A) and the remainder of component (A) is then mixed with the other components.

The examples are as follows: introducing components (A), (B), (D), (E), and (F) and any optional additives into a mixer and stirring and mixing for a prescribed period of time and incorporating component (C) immediately prior to use using a mixing device such as, for example, a static mixer or dynamic mixer; introducing components (A), (C), (D), (E), and (F) and any optional additives into a mixer and stirring and mixing for a prescribed period of time and incorporating component (B) immediately prior to use using a mixing device such as, for example, a static mixer or dynamic mixer; introducing components (C), (D), (E), and (F) and any optional additives into a mixer and stirring and mixing for a prescribed period of time and incorporating a pre-mixed mixture of components (A) and (B) immediately prior to use using a mixing device such as, for example, a static mixer or dynamic mixer; and introducing component (A), a portion of component (E), and a portion of component (F) into a mixer and preparing a uniform emulsion by stirring and mixing for a prescribed period of time, then blending component (C), component (D), the remaining component (E), the remaining component (F), and any optional additives into the resulting emulsion in a mixer to prepare a mixture, and incorporating component (B) immediately prior to use using a mixing device such as, for example, a static mixer or dynamic mixer. The emulsion comprising component (A), a portion of component (E), and a portion of component (F) may be an emulsion having as its base component a component (A) prepared by emulsion polymerization.

The curable organopolysiloxane composition of the present invention may be a single storage package formulation or a multiple storage package formulation of two or more packages. Viewed from the perspective of the long-term storage stability, in a preferred embodiment components (A) and (D) are not stored blended together and components (B), (E), and (D) are not stored blended together. Otherwise the curability of the curable organopolysiloxane composition after long-term storage may be impaired.

In specific preferred embodiments, storage is carried out as a three-package curable organopolysiloxane composition of (I) a composition comprising components (A) and (C) and any optional components, but lacking component (D), (II) a composition comprising components (D), (E), and (F), but lacking components (A) and (B), and (III) a composition comprising component (B), but lacking components (D) and (E); or as a three-package curable organopolysiloxane composition of (I) a composition comprising components (A) and (C) and any optional components, but lacking components (B), (D), (E), and (F), (II) a composition comprising components (A) and (B) and any optional components, but lacking components (C) to (F), and (III) a composition comprising components (D), (E), and (F), but lacking components (A) and (B); or as a three-package curable organopolysiloxane composition of (I) a composition comprising component (A), a portion of component (E), a portion of component (F), and any optional additives, but lacking components (B) and (D), (II) a composition comprising component (C), component (D), the remaining component (E), and the remaining component (F), but lacking component (A) and component (B), and (III) a composition comprising component (B), but lacking component (E) and component (D). Compositions (I), (II), and (III) are then mixed — using, for example, a mixing device such as a static mixer or dynamic mixer—just before submission to molding. In another preferred embodiment, storage is carried out as a two-package curable organopolysiloxane composition of (I) a composition comprising component (A) and component (B) and any optional additives, but lacking component (D) and component (E) and (II) a composition comprising components (C), (D), (E), and (F), but lacking component (A) and component (B); compositions (I) and (II) are then mixed — using, for example, a mixing device such as a static mixer or dynamic mixer —just before submission to molding.

A porous cured organopolysiloxane material can be formed from the curable organopolysiloxane composition of the present invention by various methods. Specifically, for example, the curable organopolysiloxane composition of the present invention can be introduced into the cavity of a mold and a porous cured organopolysiloxane material can be obtained by standing at room temperature or optionally with the application of heat. Alternatively, the curable organopolysiloxane composition of the present invention can be coated or cast on a releasable substrate, e.g., a resin film, and then cured, after which the porous cured organopolysiloxane material can be obtained by removing the releasable substrate. A composite article comprising a porous cured organopolysiloxane material layer on a substrate can be formed by coating the curable organopolysiloxane composition of the present invention on the surface of a substrate, e.g., a synthetic fiber fabric, glass cloth, metal plate, or by pouring the curable organopolysiloxane composition of the present invention into the void between substrates, and then curing.

The curable organopolysiloxane composition of the present invention, because it contains the hollow filler (D) in an amount that is at least 70 volume% of the total volume of component (A) and the hollow filler (D), characteristically provides a cured product that exhibits a low thermal conductivity. The porous cured organopolysiloxane material provided by the cure of the curable organopolysiloxane composition of the present invention has a thermal conductivity preferably of not more than 0.080 W/(m · K), more preferably in the range from 0.070 to 0.005 W/(m · K), and even more preferably in the range from 0.065 to 0.010 W/(m K). The thermal conductivity can be measured by fabricating a 12 mm-thick test specimen of the porous cured organopolysiloxane material and measuring the thermal conductivity of this test specimen using, for example, a QTM-500 Quick Thermal Conductivity Meter from Kyoto Electronics Manufacturing Co., Ltd,

A composite article comprising a porous cured organopolysiloxane material layer on a substrate can be formed by effecting contact between the curable organopolysiloxane composition of the present invention and the surface of at least a portion of a substrate and curing. There are no particular limitations on the material of the substrate, and the substrate can be specifically exemplified by inorganic materials such as glass, glass fiber, concrete, mortar, ceramics, stone; metals such as aluminum, iron; synthetic fiber fabrics such as nylon fiber fabrics, polyester fiber fabrics, carbon fiber fabrics synthetic resins such as polyester resin, nylon resin, polyurethane resin, epoxy resin; fiber-reinforced materials such as FRP, CFRP; and natural materials such as hemp, cotton, silk, wood. Such a composite article, because it comprises a porous cured organopolysiloxane material layer adhered to the substrate surface to form a single article, can be expected to provide the substrate with a heat-insulating character, heat-storage character, soundproofing behavior, vibration-proofing behavior, and vibration-damping behavior.

Examples

The present invention is described in specific detail by the examples and comparative examples provided below. However, the present invention is not limited by these examples. The viscosity values given in the examples were measured at 25°C. In the formulas, Me represents the methyl group and Vi represents the vinyl group.

< Density >

This was measured in accordance with JIS K 6268.

< Hardness (JIS A)>

This was measured using the type A durometer specified in JIS K 6253.

< Thermal conductivity >

A 12 mm-thick porous cured organopolysiloxane material test specimen for thermal conductivity measurement was fabricated and the thermal conductivity of this test specimen was measured using a QTM-500 Quick Thermal Conductivity Meter from Kyoto Electronics Manufacturing Co., Ltd.

< Toughness evaluation test >

A fluororesin film was spread out in a vessel having a length of 90 mm, a width of 55 mm, and a depth of 12 mm; the curable organopolysiloxane composition was poured in from above; and, after leveling the surface, this was introduced into a 40°C oven and allowed to stand for 3 days. The molding and fluororesin film were then together removed from the vessel and the fluororesin film was subsequently removed to yield a porous cured organopolysiloxane material test specimen. The toughness of the porous cured organopolysiloxane material test specimen was evaluated by finger pressure. A score of "+" was rendered when no problem was produced even upon forceful pressing with a finger; a score of "x" was rendered when the porous cured organopolysiloxane material test specimen was brittle and the surface of the molding crumbled into a powder when pressed with a finger; and a score of "× ×" was rendered when the porous cured organopolysiloxane material test specimen was very brittle and the test specimen was ruptured when the fluororesin film was removed or was ruptured by finger pressure.

Production Example 1

Production of Emulsion 1

100 mass parts of a dimethylhydroxysiloxy-endblocked polydimethylsiloxane having a kinematic viscosity of 1,000 mm$^2$/s Pa·s, 140 mass parts ion-exchanged water, and 13 mass parts sodium lauroylmethyltaurine were introduced into a homomixer from Tokushu Kika Kogyo Co., Ltd., and were mixed to uniformity at 25°C to provide emulsion 1.

production Example 2

Production of hydrosilylation reaction curable composition (I)

24 mass parts of an organopolysiloxane represented by
$(Me_3SiO_{1/2})_{0.33}(Me_2ViSiO_{1/2})_{0.11}(SiO_{4/2})_{0.57}$ wherein Me in the formula represents the methyl group and Vi represents the vinyl group and having a mass-average molecular weight of 4600 and a vinyl content of approximately 4.0 mass%, 31 mass parts of a dimethylvinylsiloxy-endblocked dimethylpolysiloxane having a viscosity of 11,000 mPa · s and a vinyl content of approximately 0.13 mass%, and 0.08 mass part of a 1,3-divinyltetramethyldisiloxane solution of a platinum/1,3-divinyltetramethyldisiloxane complex, wherein the platinum metal content of the solution was approximately 4000 ppm, were mixed to uniformity at room temperature to provide hydrosilylation reaction curable composition (I).

Production Example 3

Production of hydrosilylation reaction curable composition (II)

20 mass parts of an organopolysiloxane represented by $(Me_3SiO_{1/2})_{0.33}(Me_2ViSiO_{1/2})_{0.11}(SiO_{4/2})_{0.57}$ wherein Me in the formula represents the methyl group and Vi represents the vinyl group and having a mass-average molecular weight of 4600 and a vinyl content of approximately 4,0 mass%, 25 mass parts of a dimethylvinylsiloxy-endblocked dimethylpolysiloxane having a viscosity of 11,000 mPa · s and a vinyl content of approximately 0.13 mass%, 10.7 mass parts of an organopolysiloxane represented by the formula $(HMe_2SiO_{1/2})_8 (SiO_{4/2})_4$ and having a kinematic viscosity of 18 $mm^2$/s and a silicon-bonded hydrogen atom content of approximately 0.97 mass%, and 0.1 mass part 3,5-dimethyl-1-octyn-3-ol as a cure retarder were mixed to uniformity at room temperature to provide hydrosilylation reaction curable composition (II).

Examples 1-10 and Comparative Examples 1-3

Components (C), (D)-(F), and the other starting materials were mixed to uniformity at 25°C in the blending proportions shown in Tables 1-3. Component (A) and component (B) were then blended into the resulting mixture and degassing was performed to produce a curable organopolysiloxane composition. A fluororesin film was spread out in a vessel having a length of 90 mm, a width of 55 mm, and a depth of 12 mm; the curable organopolysiloxane composition prepared as described above was poured in from above; and, after leveling the surface, this was introduced into a 40°C oven and allowed to stand for 3 days. The molding and fluororesin film were then together removed from the vessel and the fluororesin film was subsequently removed to yield a porous cured organopolysiloxane material test specimen. These porous cured organopolysiloxane material test specimens were used to measure the density, hardness, and thermal conductivity and to evaluate test specimen toughness. These results are reported in Tables 1-3. No difference was seen between the outside dimensions of the moldings prepared in Examples 1-10 and the inside dimensions of the vessel used for molding.

Table 1.

|  |  | Example 1 | Example 2 | Example 3 | Example 4 | Comp. Ex. 1 |
|---|---|---|---|---|---|---|
| (A) a-1 | (mass parts) | 20 | 15 | 10 | 5 | 20 |
| (B) b-1 | (mass parts) | 1 | 0.75 | 0.5 | 0.25 | 1 |
| (C) c-1 | (mass parts) | 0.05 | 0.04 | 0.025 | 0.02 | 0.05 |
| (D) d-1 | (mass parts) | 10 | 10 | 10 | 10 | 10 |
| (E) | (mass parts) | 30 | 30 | 30 | 30 | 30 |
| (F) f-1 | (mass parts) | 1.0 | 0.5 | 0.5 | 0.5 | |
| component (D) volume% | | 76 | 81 | 87 | 93 | 76 |
| density (g/cm$^3$) | | 0.22 | 0.20 | 0.16 | 0.13 | 0.23 |
| hardness (JIS type A) | | 14 | 9 | 14 | 11 | 8 |
| thermal conductivity W/(m·K) | | 0.060 | 0.064 | 0.048 | 0.045 | 0.061 |
| toughness evaluation results | | + | + | + | + | ×× |

Table 2.

| | | Example 5 | Example 6 | Example 7 | Example 8 | Comp. Ex. 2 |
|---|---|---|---|---|---|---|
| (A) a-1 | (mass parts) | 10 | 10 | 10 | 10 | 10 |
| (B) b-1 | (mass parts) | 0.5 | 0.5 | 0.5 | 0.5 | 0.5 |
| (C) c-1 | (mass parts) | 0.025 | 0.025 | | | |
| (C) c-2 | (mass parts) | | | 0.025 | 0.025 | 0.025 |
| (D) d-1 | (mass parts) | 10 | 10 | 10 | 10 | 10 |
| (E) | (mass parts) | 20 | 40 | 30 | 30 | 30 |
| (F) f-1 | (mass parts) | 0.5 | 0.5 | | | |
| (F) f-2 | (mass parts) | | | 1 | | |
| (F) f-3 | (mass parts) | | | | 1 | |
| component (D) volume% | | 87 | 87 | 87 | 87 | 87 |
| density (g/cm$^3$) | | 0.18 | 0.13 | 0.18 | 0.16 | 0.16 |
| hardness (JIS type A) | | 14 | 14 | 15 | 15 | NA |
| thermal conductivity W/(m·K) | | 0.051 | 0.047 | 0.053 | 0.054 | NA |
| toughness evaluation results | | + | + | + | + | x x |
| NA: The test specimen was so brittle that the evaluation could not be performed. | | | | | | |

Table 3.

| | | Example 9 | Example 10 | Comp. Ex. 3 |
|---|---|---|---|---|
| (A) a-1 | (mass parts) | | 10 | 12 |
| (A) a-2 | (mass parts) | 10 | | |
| (B) b-1 | (mass parts) | | 0.5 | 0.6 |
| (B) b-2 | (mass parts) | 0.5 | | |
| (C) c-2 | (mass parts) | | 0.03 | 0.03 |
| (C) c-3 | (mass parts) | 0.15 | | |
| cure retarder | (mass parts) | 0.02 | | |
| (D) d-1 | (mass parts) | 7.2 | | |
| (D) d-2 | (mass parts) | | 10 | 8 |
| (E) | (mass parts) | 14.4 | 20 | |
| (F) f-1 | (mass parts) | 0.5 | 0.5 | |
| component (D) volume% | | 82 | 83 | 76 |
| density (g/cm$^3$) | | 0.27 | 0.15 | 0.23 |
| hardness (JIS type A) | | 6 | 5 | 5 |
| thermal conductivity W/(m·K) | | 0.062 | 0.044 | 0.054 |
| toughness evaluation results | | + | + | $\times$ |

Examples 11-13

Using the blending proportions given in Table 4, components (C)-(F) were mixed to uniformity at 25°C into the emulsion 1 prepared in Production Example 1. Component (B) was then blended into the resulting mixture and degassing was performed to produce a curable organopolysiloxane composition. A fluororesin film was spread out in a vessel having a length of 90 mm, a width of 55 mm, and a depth of 12 mm; the curable organopolysiloxane composition prepared as described above was poured in from above; and, after leveling the surface, this was introduced into a 40°C oven and allowed to stand for 3 days. The molding and fluororesin film were then together removed from the vessel and the fluororesin film was subsequently removed to yield a porous cured organopolysiloxane material test specimen. These porous cured organopolysiloxane material test specimens were used to measure the density, hardness, and thermal conductivity and to evaluate test specimen toughness. These results are reported in Table 4. No difference was seen between the outside dimensions of the moldings prepared in Examples 11-13 and the inside dimensions of the vessel used for molding,

Table 4.

| | | Example 11 | Example 12 | Example 13 |
|---|---|---|---|---|
| (A) a-1 | (mass parts) | 10 | 5 | |
| (B) b-1 | (mass parts) | 0.8 | 0.5 | 0.5 |
| (C) c-1 | (mass parts) | 0.025 | 0.025 | 0.03 |
| emulsion 1 | (mass parts) | 10 | 10 | 12.5 |
| (D) d-1 | (mass parts) | 10 | 10 | 10 |
| (E) | (mass parts) | 30 | 30 | 22.5 |
| (F) f-1 | (mass parts) | 0.5 | 0.5 | 0.5 |
| component (D) volume% | | 82 | 88 | 93 |
| density (g/cm$^3$) | | 0.2 | 0.15 | 0.13 |
| hardness (JIS type A) | | 13 | 20 | 10 |
| thermal conductivity W/(m·K) | | 0.035 | 0.046 | 0.037 |
| toughness evaluation results | | + | + | + |

Example 14

Using the blending proportions given in Table 5, the hydrosilylation reaction curable composition (I) prepared in Production Example 2, the hydrosilylation reaction curable composition (II) prepared in Production Example 3, and components (D)-(F) were mixed to uniformity at 25°C and degassing was performed to produce a curable organopolysiloxane composition. A fluororesin film was spread out in a vessel having a length of 90 mm, a width of 55 mm, and a depth of 12 mm; the curable organopolysiloxane composition prepared as described above was poured in from above; and, after leveling the surface, this was introduced into a 40°C oven and allowed to stand for 3 days. The molding and fluororesin film were then together removed from the vessel and the fluororesin film was subsequently removed to yield a porous cured organopolysiloxane material test specimen. These porous cured organopolysiloxane material test specimens were used to measure the density, hardness, and thermal conductivity and to evaluate test specimen toughness. These results are reported in Table 5. No difference was seen between the outside dimensions of the obtained molding and the inside dimensions of the vessel used for molding.

Table 5.

| | | Example 14 |
|---|---|---|
| hydrosilylation reaction curable composition (I) | (mass parts) | 7 |
| hydrosilylation reaction curable composition (II) | (mass parts) | 7 |
| (D) d-1 | (mass parts) | 20 |
| (E) | (mass parts) | 60 |
| (F) f-1 | (mass parts) | 0.5 |

(continued)

| | Example 14 |
|---|---|
| component (D) volume% | 90 |
| density (g/cm$^3$) | 0.13 |
| hardness (JIS type A) | 13 |
| thermal conductivity W/(m·K) | 0.046 |
| toughness evaluation results | + |

Example 15

Using the blending proportions given in Table 6, components (C)-(F) were mixed to uniformity at 25°C to provide a composition (I), which was stored. Component (A) and component (B) were mixed to uniformity at 25°C using the blending proportions given in Table 6 to provide a composition (II), which was stored. Then, composition (I) and composition (II) were mixed to uniformity in proportions of 50.6: 12.5 and degassing was performed to produce a curable organopolysiloxane composition. A fluororesin film was spread out in a vessel having a length of 90 mm, a width of 55 mm, and a depth of 12 mm; the curable organopolysiloxane composition prepared as described above was poured in from above; and, after leveling the surface, this was introduced into a 40°C oven and allowed to stand for 3 days. The molding and fluororesin film were then together removed from the vessel and the fluororesin film was subsequently removed to yield a porous cured organopolysiloxane material test specimen. These porous cured organopolysiloxane material test specimens were used to measure the density, hardness, and thermal conductivity and to evaluate test specimen toughness. These results are reported in Table 6. No difference was seen between the outside dimensions of the obtained molding and the inside dimensions of the vessel used for molding.
Table 6.

| | | Example 15 | |
|---|---|---|---|
| | | composition (I) | composition (II) |
| (A) a-1 | (mass parts) | | 10 |
| (B) b-1 | (mass parts) | | 2.5 |
| (C) c-2 | (mass parts) | 0.1 | |
| (D) d-1 | (mass parts) | 10 | |
| (E) | (mass parts) | 40 | |
| (P) f-1 | (mass parts) | 0.5 | |
| component (D) volume% | | 87 | |
| density (g/cm$^3$) | | 0.14 | |
| hardness (JIS type A) | | 10 | |
| thermal conductivity W/(m·K) | | 0.043 | |
| toughness evaluation results | | + | |

The entries in Tables 1 to 6 are described below.

[Component A]

a-1: A polydimethylsiloxane endblocked by dimethylhydroxysiloxy at both molecular chain terminals and having a viscosity of 4,000 mPa·s.
a-2: A dimethylsiloxane methylvinylsiloxane copolymer endblocked by dimethylvinylsiloxy at both molecular chain terminals and having a viscosity of 7,500 mPa · s and a vinyl content of approximately 0.31 mass%.

[Component B]

b-1: methyltrimethoxysilane

b-2: A dimethylsiloxane methylhydrogensiloxane copolymer endblocked by trimethylsiloxy at both molecular chain terminals and having a kinematic viscosity of 15 mm$^2$/s and a silicon-bonded hydrogen atom content of approximately 0.82 mass%.

[Component C]

c-1: di-n-butyltin dilaurate

c-2: dimethyltin dilaurate

c-3: A 1,3-divinyltetramethyldisiloxane solution of a platinum/1,3-divinyltetramethyldisiloxane complex. Platinum metal content of approximately 4,000 ppm.

[Component D]

d-1: Trade name: Glass Bubbles K15 (purchased from Sumitomo 3M Limited, true density of 0.15 g/cm$^3$)

d-2: Surface-treated hollow filler produced by mixing the following to uniformity: 1 mass part 3-glycidoxypropyltrimethoxysilane and 100 mass parts Matsumoto Microsphere from Matsumoto Yushi-Seiyaku Co., Ltd. (grade: F-50E, true density: 0.03 g/cm$^3$, mixture with 85 mass% water).

[Component E]

ion-exchanged water

[Component F]

f-1: Nonionic surfactant from Kao Corporation, trade name: Emulgen LS-114; polyoxyalkylene alkyl ether.

f-2: SZ-1995 from Dow Corning Toray Co., Ltd., a trimethylsiloxy-endblocked dimethylsiloxane - methyl(propyl(polyoxyethylene)hydroxy)siloxane copolymer with a kinematic viscosity of 363 mm$^2$/s.

f-3: FZ-2215 from Dow Corning Toray Co., Ltd., a dimethylpolysiloxane - poly(oxyethylene - oxypropylene) copolymer with a kinematic viscosity of 15,000 mm$^2$/s.

[Component (D) volume%]

This was calculated using the formula provided below, letting the component (D) volume (Vd) be the quotient obtained by dividing the quantity of component (D) incorporation in mass parts by the true density of component (D) and letting the component (A) volume (Va) be the quotient obtained by dividing the quantity of component (A) incorporation in mass parts by the density of component (A). When component (D) was a mixture with water, Vd was determined using the quantity of solids incorporation.

$$\text{component (D) volume\%} = Vd/(Vd + Va) \times 100$$

**Industrial Applicability**

The curable organopolysiloxane composition of the present invention as described above, because it forms a porous cured organopolysiloxane material after molding, is well suited for use as a heat-insulating material, a sound-absorbing material, a soundproofing material, a vibration-proofing material, a vibration-damping material, cushioning, packings, gaskets, pads. Due to the high heat resistance of organopolysiloxanes, it is particularly well suited for use in members that are used in high temperature ambients. In addition, the curable organopolysiloxane composition of the present invention adheres strongly to the surface of substrate in contact with the composition during its cure, and for this reason the composition is useful for forming a composite article that has a porous cured organopolysiloxane material layer. Such a composite article can be expected to have a heat-insulating character, heat-storage character, soundproofing behavior, vibration-proofing behavior, and vibration-damping behavior. In addition, the porous cured organopolysiloxane material of the present invention exhibits weathering resistance and has a surface that also resists contamination or staining in outdoor exposure testing and is therefore also well suited for use in members that are used outdoors.

**Claims**

1.  A curable organopolysiloxane composition comprising

    (A) an organopolysiloxane that contains at least two crosslinking reactive groups in each molecule,
    (B) a crosslinking agent,
    (C) a crosslinking catalyst,
    (D) a hollow filler having a true density of 0.001 to 3.000 $g/cm^3$, in an amount that is at least 70 volume% of the total volume of component (A) and the hollow filler,
    (E) water, at 20 to 1,000 mass parts per 100 mass parts component (A), and
    (F) an emulsifying agent, at 0.01 to 30 mass parts per 100 mass parts component (E).

2.  The curable organopolysiloxane composition according to claim 1, that is characteristically a condensation reaction curable type.

3.  The curable organopolysiloxane composition according to claim 1, that is characteristically a hydrosilylation reaction curable type.

4.  The curable organopolysiloxane composition according to any of claims 1 to 3, **characterized in that** the hollow filler (D) is a hollow glass filler.

5.  The curable organopolysiloxane composition according to any of claims 1 to 3, **characterized in that** the hollow filler (D) is a hollow organic resin filler.

6.  A porous cured organopolysiloxane material obtained by curing a curable organopolysiloxane composition according to any of claims 1 to 5.

7.  The porous cured organopolysiloxane material according to claim 6, that characteristically has a thermal conductivity of not more than 0.080 W/(m·K).

8.  A composite article comprising a substrate formed into a single article with a porous cured organopolysiloxane material obtained by curing a curable organopolysiloxane composition according to any of claims 1 to 5.

9.  A method of producing a composite article, **characterized by** bringing the surface of at least a portion of a substrate into contact with a curable organopolysiloxane composition according to any of claims 1 to 5; and thereafter curing the curable organopolysiloxane composition.

**Patentansprüche**

1.  Härtbare Organopolysiloxan-Zusammensetzung, die Folgendes umfasst:

    (A) ein Organopolysiloxan, das mindestens zwei vernetzende reaktive Gruppen in jedem Molekül enthält,

(B) einen Vernetzer,

(C) einen Vernetzungskatalysator,

(D) einen hohlen Füllstoff mit einer Reindichte von 0,001 bis 3,000 g/cm$^3$ in einer Menge, die mindestens 70 Volumen-% des Gesamtvolumens der Komponente (A) und des hohlen Füllstoffs beträgt,

(E) Wasser zu 20 bis 1 000 Massenteilen pro 100 Massenteile der Komponente (A), und

(F) einen Emulgator zu 0,01 bis 30 Massenteilen pro 100 Massenteile der Komponente (E).

2. Härtbare Organopolysiloxan-Zusammensetzung nach Anspruch 1, die charakteristischweise vom durch Kondensationsreaktion härtbaren Typ ist.

3. Härtbare Organopolysiloxan-Zusammensetzung nach Anspruch 1, die charakteristischweise vom durch Hydrosilylierungsreaktion härtbaren Typ ist.

4. Härtbare Organopolysiloxan-Zusammensetzung nach einem der Ansprüche 1 bis 3, **dadurch gekennzeichnet, dass** der hohle Füllstoff (D) ein hohler Glasfüllstoff ist.

5. Härtbare Organopolysiloxan-Zusammensetzung nach einem der Ansprüche 1 bis 3, **dadurch gekennzeichnet, dass** der hohle Füllstoff (D) ein hohler Füllstoff aus organischem Harz ist.

6. Poröses gehärtetes Organopolysiloxan-Material, das durch Härten einer härtbaren Organopolysiloxan-Zusammensetzung nach einem der Ansprüche 1 bis 5 erhalten wird.

7. Poröses gehärtetes Organopolysiloxan-Material nach Anspruch 6, das charakteristischerweise eine Wärmeleitfähigkeit von nicht größer als 0,080 W/(m·K) aufweist.

8. Zusammengesetzter Artikel, der Folgendes umfasst: ein Substrat, das zu einem einzelnen Artikel mit einem porösen gehärteten Organopolysiloxan-Material gestaltet ist, das durch Härten einer härtbaren Organopolysiloxan-Zusammensetzung nach einem der Ansprüche 1 bis 5 erhalten wird.

9. Verfahren zur Herstellung eines zusammengesetzten Artikels, **dadurch gekennzeichnet, dass** die Oberfläche von zumindest einem Teil eines Substrats mit einer härtbaren Organopolysiloxan-Zusammensetzung nach einem der Ansprüche 1 bis 5 in Kontakt gebracht wird; und dass danach die härtbare Organopolysiloxan-Zusammensetzung gehärtet wird.

**Revendications**

1. Composition durcissable d'organopolysiloxane comprenant

(A) un organopolysiloxane qui contient au moins deux groupements réactifs de réticulation dans chaque molécule,

(B) un agent de réticulation,

(C) un catalyseur de réticulation,

(D) une charge creuse ayant une densité véritable de 0,001 à 3000 g/cm$^3$, dans une quantité qui est d'au moins de 70 % en volume du volume total du composant (A) dans la fibre creuse,

(E) de l'eau, de 20 à 1000 parties en masse pour 100 parties en masse du composant (A), et

(F) un agent émulsifiant, de 0,01 à 30 parties en masse pour 100 parties en masse du composant (E).

2. Composition durcissable d'organopolysiloxane selon la revendication 1, qui est de façon caractéristique un type durcissable par réaction de condensation.

3. Composition durcissable d'organopolysiloxane selon la revendication 1, qui est de façon caractéristique un type durcissable par réaction d'hydrosilylation.

4. Composition durcissable d'organopolysiloxane selon l'une quelconque des revendications 1 à 3, **caractérisée en ce que** la charge creuse (D) est une charge creuse en verre.

5. Composition durcissable d'organopolysiloxane selon l'une quelconque des revendications 1 à 3, **caractérisée en**

**ce que** la charge creuse (D) est une charge creuse en résine organique.

6. Matériau organopolysiloxane durci poreux obtenu par durcissement d'une composition durcissable d'organopolysiloxane selon l'une quelconque des revendications 1 à 5.

7. Matériau organopolysiloxane durci poreux selon la revendication 6, qui possède de façon caractéristique une conductivité thermique inférieure ou égale à 0,080 W/(m·K)

8. Article composite comprenant un substrat formé en un article unique avec un matériau organopolysiloxane durci poreux obtenu par durcissement d'une composition durcissable d'organopolysiloxane selon l'une quelconque des revendications 1 à 5.

9. Procédé de production d'un article composite, **caractérisé par** les étapes consistant à amener une surface d'au moins une portion d'un substrat au contact d'une composition durcissable d'organopolysiloxane selon l'une quelconque des revendications 1 à 5 ; puis à durcir ensuite la composition durcissable d'organopolysiloxane.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000143986 A
- US 6261214 B
- JP 2003147207 A
- US 20040132890 A
- JP 10077409 A